# EUROPEAN PATENT APPLICATION

(11) **EP 2 228 259 A1**
(43) Date of publication of application: **15.09.2010**
(21) Application number: 10155441.8
(22) Date of filing: 04.03.2010
(51) Int. Cl.: B60R 1/00

(54) **Sideview Vision System displaying a view dependent upon transmission selector**

(30) Priority: 11.03.2009 US 401992
(71) Applicant: Delphi Technologies, Inc., Troy, MI 48007 (US)
(72) Inventor: Garner, Timothy D., Kokomo, IN 46902 (US)
(74) Representative: Denton, Michael John

(57) **Abstract**

A sideview vision system in a vehicle (10) and a method for operating the system. The sideview vision system has a camera (16) fixedly mounted to the vehicle for capturing an image (8) alongside and extending rearward the vehicle, and a display (14) for displaying a view to a driver (12) of the vehicle. The method includes capturing an image using the camera, the image having a first portion (41) and a second portion (42) different from the first portion, displaying a first view corresponding to the first portion in response to the vehicle transmission being in a forward gear, and displaying a second view corresponding to the second portion in response to the transmission being in a reverse gear.

## Description

### TECHNICAL FIELD

The invention relates to sideview vision systems for vehicles that include a camera and a display viewable by a driver. More particularly, this invention relates to such sideview vision system wherein the portion of an image from the camera that is displayed is dependent upon the transmission selector position, for example, whether the vehicle is in a forward gear or in a reverse gear.

### BACKGROUND OF INVENTION

It is known to provide sideview mirrors on vehicles to assist a driver with viewing an area alongside and behind a vehicle. Mirrors are useful for assisting the driver in seeing obstacles prior to changing lanes or backing up, where the obstacles might otherwise collide with the vehicle. However, conventional sideview mirrors have a limited field of view and do not provide the driver with a comprehensive view of the area, so objects in portions of the area alongside and behind a vehicle may not be seen by the driver. These portions where unseen objects may reside are not seen because the conventional sideview mirrors have fixed positions after being adjusted by the driver. For example, if the mirror position is adjusted by the driver to be optimum for traveling in a forward direction where the driver is observing an adjacent traffic lane rearward the vehicle, then the mirror may not be optimally adjusted for backing up where the driver needs to see the area near the rear wheel and rear bumper.

It has been proposed to provide motorized mirror position controls to adjust the position of the mirror in response to the vehicle shifting into reverse. However, this provision has an undesirable time response delay due to the mechanical motion, and adds undesirable cost and complexity to the mirror assembly. It is also proposed to provide cameras with motorized aiming controls and displays to supplement the sideview mirrors. As with sideview mirrors, mechanically changing the aimed direction of a camera using a mechanical position control system has the same undesirable cost, complexity, and time response delay problems as the motorized mirrors.

Therefore, what is needed is a sideview vision system having a camera capturing an image of the area beside and extending rearward a vehicle and a display for displaying a view of a determined portion of the image, where the portion determined is based upon the transmission selector position and is provided without the cost, complexity, and time response delay associated with mechanical position controls. Such a sideview vision system may be advantageous in providing a view during forward driving that is optimum for lane changes and similar maneuvers, and a different view during reverse travel that is optimized for that purpose.

### SUMMARY OF THE INVENTION

In accordance with this invention, a sideview vision system for a vehicle is provided. The vehicle includes a transmission selector having a first position and a second position. The sideview vision system includes a camera fixedly mounted to the vehicle and adapted for capturing an image alongside and extending rearward the vehicle. The image includes a first portion and a second portion distinct from the first portion. The sideview vision system also includes a display for displaying a view to a driver of the vehicle and a controller for receiving the image from the camera, determining a view to show the vehicle driver, and configured to output the view to the display. The view corresponds to the first portion when the transmission selector is in the first position and to the second portion when the transmission selector is in the second position.

In another aspect of this invention, a method of operation of a sideview vision system includes the steps of capturing an image using the camera, displaying a first view corresponding to a first portion of the image in response to the transmission selector being in the first position, and displaying a second view corresponding to a second portion of the image in response to the transmission selector being in the second position.

Further features and advantages of the invention will appear more clearly on a reading of the following detail description of the preferred embodiment of the invention, which is given by way of non-limiting example only and with reference to the accompanying drawings.

### BRIEF DESCRIPTION OF DRAWINGS

This invention will be further described with reference to the accompanying drawings in which:

Fig. 1 is a perspective view of a vehicle equipped with a sideview vision system in accordance with this invention,

Fig. 2 shows an exemplary image obtainable by the sideview vision system in Fig. 1,

Fig. 3 is a cut-away perspective view of the interior of the vehicle in Fig. 1,

Fig. 4 is a block diagram of the sideview vision system in Fig. 1,

Fig. 5 is a flow chart of a method for operating the sideview vision system in Fig. 1,

Fig. 6 shows a view of a portion of the image in Fig. 2,

Fig. 7 shows a view of a portion of the image in Fig. 2,

Fig. 8 shows an image obtainable by the sideview vision system in Fig. 1,

Fig. 9 shows an image obtainable by the sideview vision system in Fig. 1,

Fig. 10 shows an image obtainable by the sideview vision system in Fig. 1,

Fig. 11 shows an image obtainable by the sideview vision system in Fig. 1,

Fig. 12 shows an image obtainable by the sideview vision system in Fig. 1.

### DESCRIPTION OF THE PREFERED EMBODIMENT

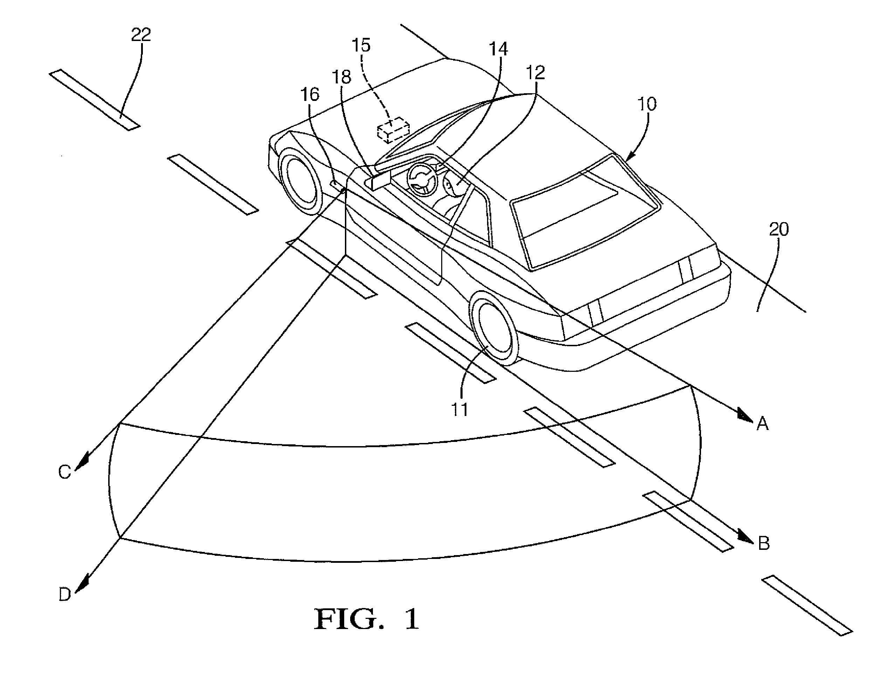

In accordance with a preferred embodiment of this invention, Fig. 1 shows a vehicle 10 operated by a driver 12 along a roadway 20 having a region adjacent vehicle 10. Roadway 20 includes lane markers, referred to herein as boundary 22. The roadway could be a multi-lane highway, where the adjacent region is a traffic lane where other vehicles travel in the same direction as vehicle 10, or a two-lane road, where the adjacent region is a traffic lane where other vehicles travel in the opposite direction. Alternatively, the vehicle could be parallel parked on a shoulder of a roadway and the region is a traffic lane, or the vehicle could be in a driveway, where the region is a lawn boarding the driveway. The vehicle has a conventional sideview mirror 18 to assist the driver with observing an area alongside and extending rearward the vehicle and identifying objects adjacent to the vehicle. In accordance with this invention, vehicle 10 is also equipped with a sideview vision system that includes a camera 16, a controller 15, and a display 14. Controller 15 receives a signal from camera 16 corresponding to an image captured by the camera and outputs a view of a portion of the image to display 14, thereby providing driver 12 with a view of a portion of the image. Controller 15 is preferably positioned in the vehicle so the connections to camera 16 and display 14 are convenient to make.

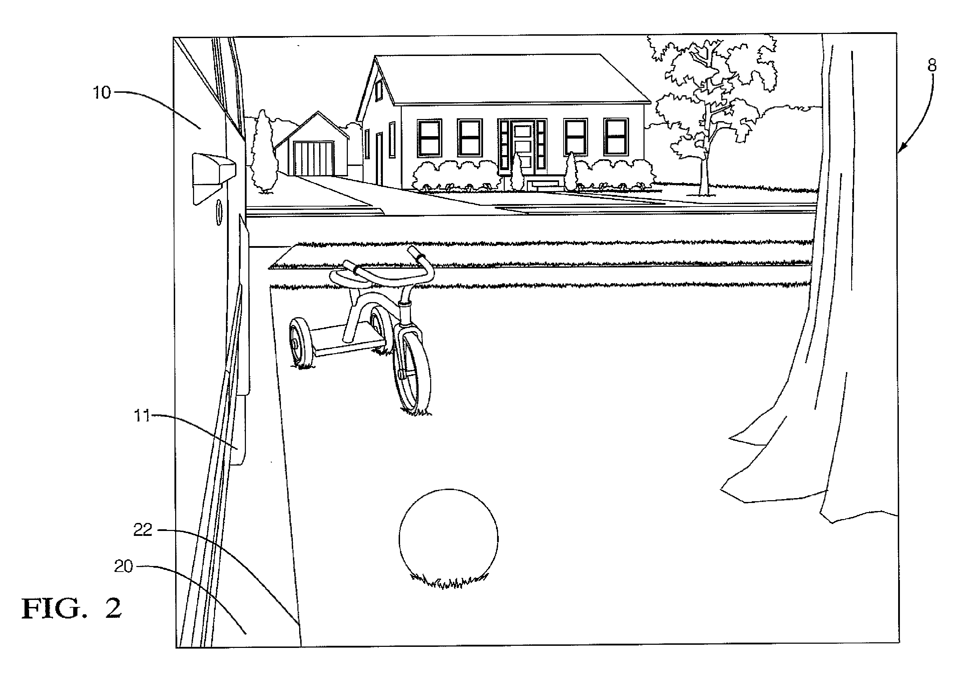

Camera 16 is fixedly mounted to the vehicle and positioned on the vehicle to capture an image covering the area alongside the vehicle, from forward of rear wheel 11 to rearward of rear wheel 11 and extending rearward the vehicle. The camera is aimed and configured so the image includes areas to supplement the driver's peripheral vision and the sideview mirrors. Camera 16 captures an image of the area indicated by indicated by arrows A, B, C, and D. Arrows B and D coincide with the surface of the roadway, and arrows A and C point above the horizon surrounding the vehicle. As indicated by arrows A and B, the field of view in this embodiment includes the side of vehicle 10 and shows a rear wheel 11. Also in this embodiment, arrows C and D are oriented so the image includes the edge of the driver peripheral vision. By way of example, Fig. 2 shows an image 8 such as might be captured by camera 16. The area captured by the camera is adjusted as necessary for different types of vehicles such as trucks and off-road equipment.

Display 14 receives an output from controller 15 for showing a view of a portion of an image to driver 12 to supplement the view provided by sideview mirror 18. Display 14 is preferably positioned so driver 12 can observe the area adjacent the vehicle with less head and eye movement than required for conventional sideview mirrors alone, thereby decreasing driver distraction and improving safety. The display device could be used only by the sideview vision system, or could be a general purpose display for conveying other information to the driver such as driving directions or engine operation information.

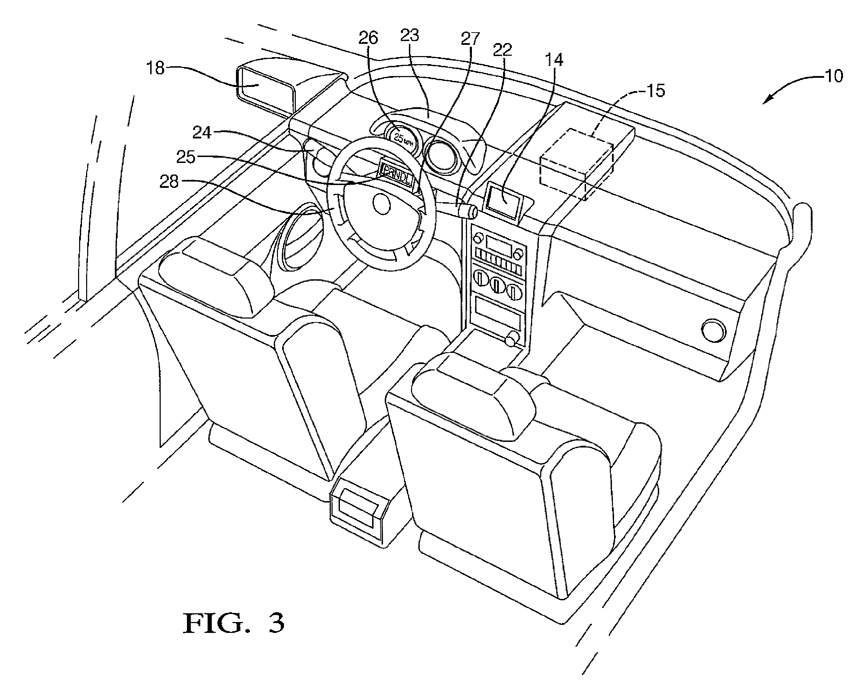

Fig. 3 shows an exemplary interior of vehicle 10 having an instrument panel 23. Instrument panel 23 includes a transmission indicator 25, a speedometer 26, a display 14, and a steering column 27 supporting a turn-signal selector 24, a steering wheel 28, and a transmission selector 29. Speedometer 26 indicates the speed of the vehicle. Turn-signal selector 24 is used by the driver to activate lights on the vehicle for indicating the driver's intent to make a turn or lane change. Steering wheel 28 is moved by the driver to establish a condition for straight travel or turning in preparation to moving the vehicle, and steering the vehicle when the vehicle is moving. Transmission selector 29 is moved by the driver to select a transmission gear. In response to moving transmission selector 29, a transmission indicator 25 changes to indicate the gear selected. If the driver wishes to have the vehicle remain stationary, transmission selector 29 may be moved to a park position, whereupon the display on the instrument panel confirms the P selection, for example by increasing the luminous intensity relative to other gear selector positions. If the driver wishes to travel forward, the transmission selector may be moved to a drive gear, whereupon D indicating drive may be indicated. If the driver wishes to travel backward, transmission selector 29 may be moved to a reverse gear, whereupon R indicating reverse may be indicated. Alternately, the transmission selector could be located on the console between the driver and passenger seats or be coupled to a manual type transmission. Display 14 is shown to the right of steering column 27, but could be located anywhere on instrument panel. For example, locating display 14 between speedometer 26 and mirror 18 may be a benefit to the driver.

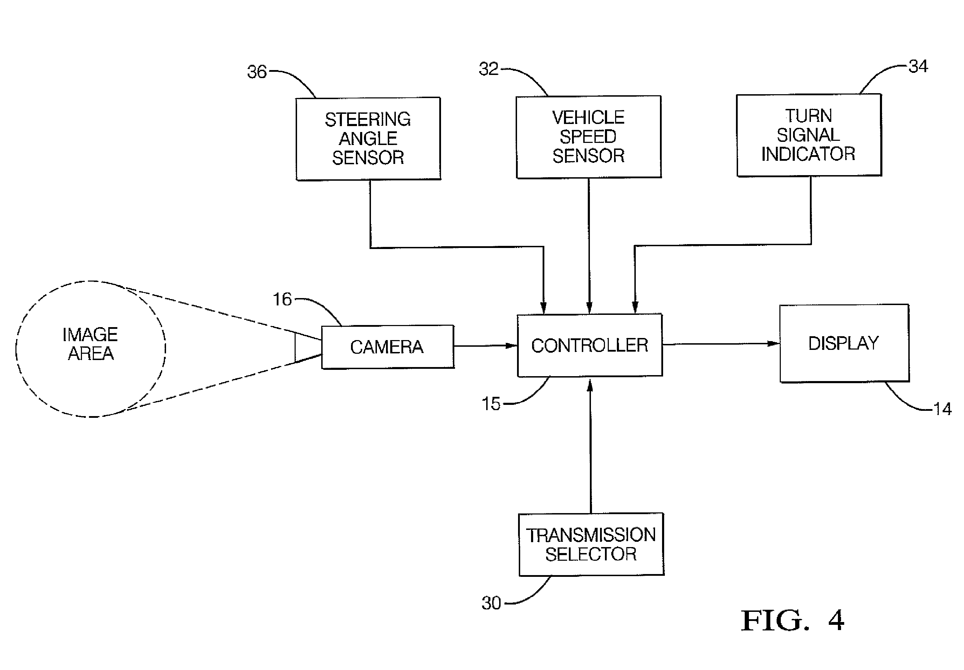

Referring now to Fig. 4, camera 16 captures an image of an area and outputs a signal to controller 15 corresponding to the image captured. Controller 15 receives the signal from camera 16 and outputs a signal to display 14, where the signal to display 14 is a view of a portion of the image. Controller 15 determines the portion determined for display based on a signal from a transmission selector position 30 indicative of which gear is engaged by the vehicle transmission. Controller 15 can further determine a view for display based on a signal from steering angle sensor 36 that is indicative of the angle of steering wheel 28, a signal from a vehicle speed sensor 32 that corresponds to the vehicle speed indicated on speedometer 26, and a signal from a turn signal indicator 34 that is indicative of the position of turn signal selector 24.

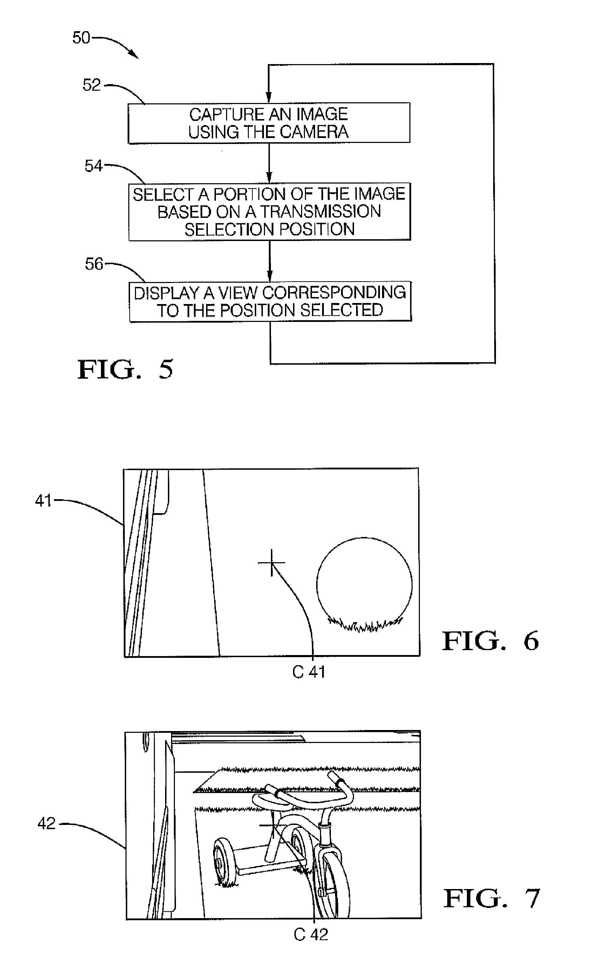

Fig. 5 shows flowchart 50 for operating a sideview vision system in a vehicle, where the vehicle provides a signal indicative of transmission selector position including a forward gear indication and a reverse gear indication. At step 52, an image is captured using camera 16, where the image covers an area beside and extending rearward the vehicle. The image includes a first portion useful in navigating forward motion by the vehicle by, for example, showing an area forward of the rear wheel or a lane adjacent to the vehicle, and a second portion useful in navigating reverse motion by the vehicle by, for example, showing an area behind the vehicle rear wheel. At step 54, a portion of the image is determined based on a transmission selector position, and where determining the first portion is in response to a forward gear indication, and determining the second portion is in response to a reverse gear indication. At step 56, a view is displayed corresponding to the portion determined. At step 54, the portion may optionally be determined based a vehicle speed corresponding to the reading on speedometer 26, a turn-signal activation corresponding to the position of turn-signal selector 24, and a steering angle corresponding to the position of steering wheel 28. Such an optional determination provides a variety of views to the driver for optimized for various combinations of transmission gear selection, vehicle speed, steering angle and turn signal activation.

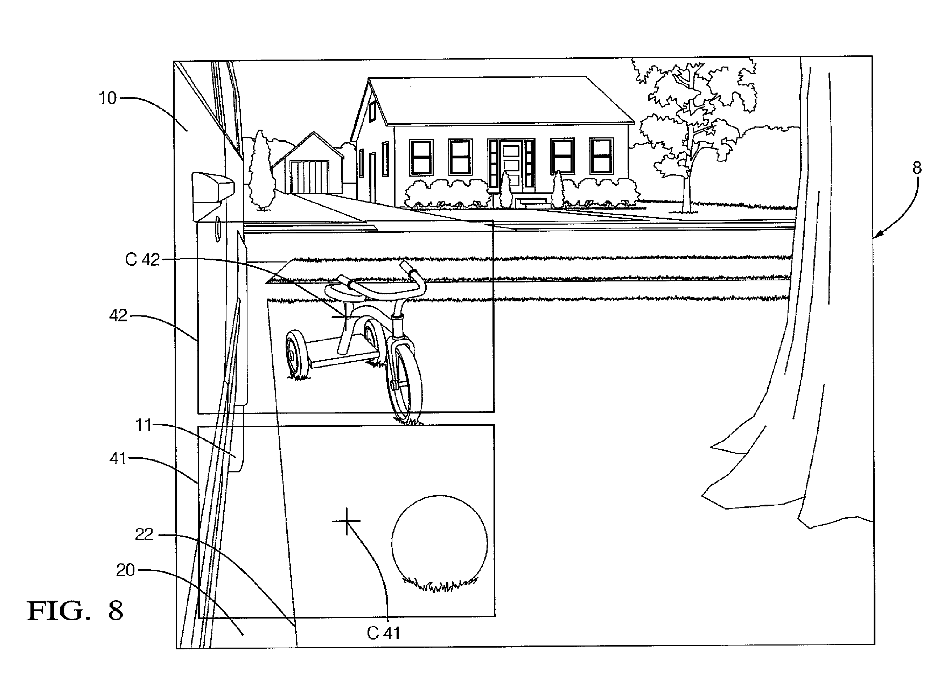

Fig. 8 shows an exemplary image 8 from the camera where vehicle 10 is parked in a driveway where the region on the other side of boundary 22 with respect to vehicle 10 is a lawn. The image includes the horizon behind the vehicle so the driver can detect objects long distances behind the vehicle and includes an area near the vehicle rear wheel so the driver can detect objects close to the rear wheel if the driver is preparing to move the vehicle. The portion of image 8 determined by controller 15 for viewing can be characterized by a center of view and a magnification of view. The center of view corresponds to the center of the portion determined for viewing. As used herein, magnification refers to an apparent size of the objects in the display. Increasing the magnification increases the apparent size of objects within the view sent to the display. The center and magnification help determine the boundaries of the determined portion of the image and provide for a simple way to configure or program the controller to respond to various changes in transmission selector position, vehicle speed, turn-signal activation, and steering angle. Portion 41 and portion 42 are two exemplary portions determined by the controller for viewing, and each portion has a corresponding center of view as indicated by cross C41 and C42 respectively.

By way of an example, portion 41 is determined in response to the transmission selector 29 being moved by the driver to select a forward gear such as D in preparation for traveling forward. Portion 41 emphasizes an area near the vehicle and forward of vehicle rear wheel 11. Fig. 6 shows the view determined by the controller and shown to the driver on the display that corresponds to first portion 41. Cross C41 indicates the center of portion 41 and may or may not be in the view shown in Fig. 6, but it is included in this example for clarity. Alternately, by way of an example, a portion 42 in Fig. 8 is determined in response to the transmission selector 29 being moved by the driver to select a reverse gear such as R in preparation for traveling rearward. Portion 42 emphasizes an area near the vehicle and rearward of the vehicle rear wheel 11. Fig. 7 shows the corresponding view shown to the driver on the display that corresponds to portion 42. Cross C42 indicates the center of portion 42 and may or may not be in the view shown in Fig. 7, but it is included in this example for clarity. Portion 41 and portion 42 as depicted in Fig. 8 are distinct and do not overlap. Alternately, the selected portions may overlap. As used herein, distinct portions may include portions that partially overly each other, or wherein one portion may cover a larger area that includes the other.

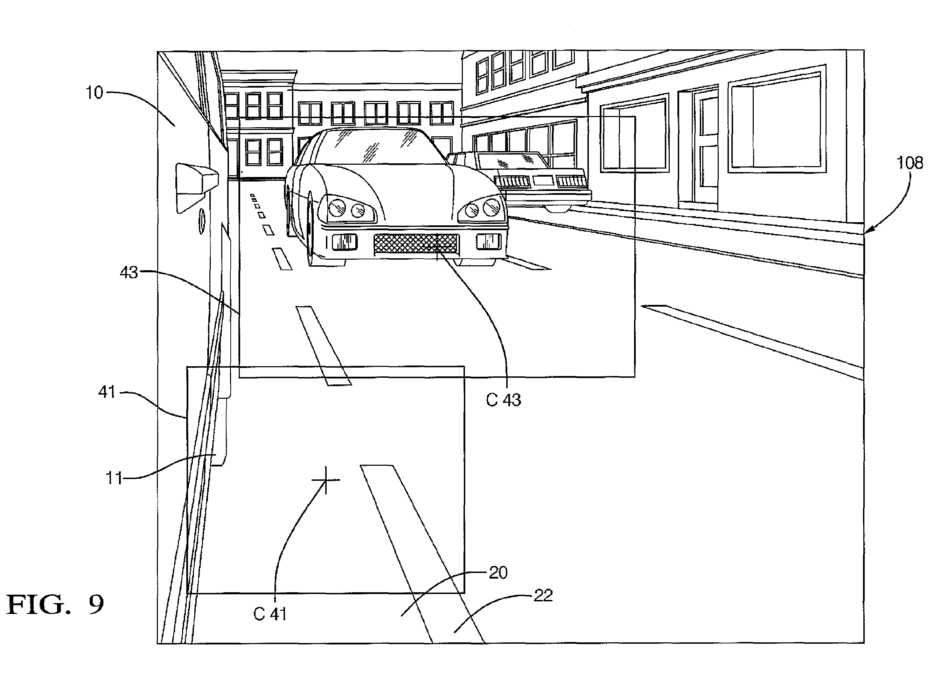

In another embodiment, the vehicle has a turn signal indicator, and the controller is further configured to determine a portion based upon activation of the turn signal. By way of an example, Fig. 9 shows an image 108 where vehicle 10 is parallel parked along a city street. When the driver shifts the transmission into a forward gear, portion 41 is determined by the controller for display to the driver. If then, in preparation to moving the vehicle, the driver indicates his intent to move from the present parking place into the adjacent traffic lane by activating the turn signal; the controller may be configured to display a different view such as one corresponding to portion 43. Portion 43 has a different center than portion 41 and a reduced apparent magnification when compared to portion 41. A view of portion 43 may assist the driver with checking a traffic lane adjacent vehicle for approaching vehicles before moving the vehicle into the traffic lane.

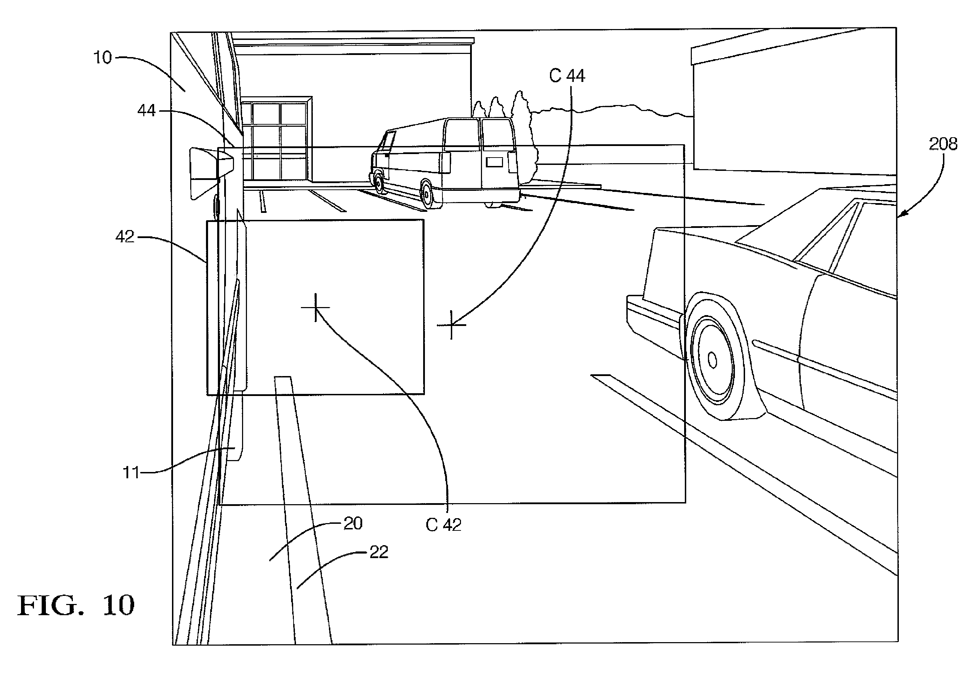

In another embodiment, the vehicle has a steering angle sensor and the controller is configured to determine a portion based upon the steering angle. A scenario where the driver may benefit from the portion being determined by steering angle. By way of an example, Fig. 10 shows an image 208 where vehicle 10 vehicle 10 is parked in a parking lot. When the transmission selector is moved to select a reverse gear in preparation for backing out of the parking place, the controller displays portion 42. Then, when the transmission is in the reverse gear and the steering wheel is rotated to turn the vehicle out of the parking place the portion displayed changes to portion 44. Portion 44 may assist the driver in determining that the area where the front wheels of the vehicle may travel while backing with the steering wheel rotated is clear of objects. The change from portion 42 to portion 44 may be abrupt after rotating the steering wheel more than a predetermined amount, or may change gradually where the portion displayed is incrementally changed from one portion to the other as the steering wheel is rotated.

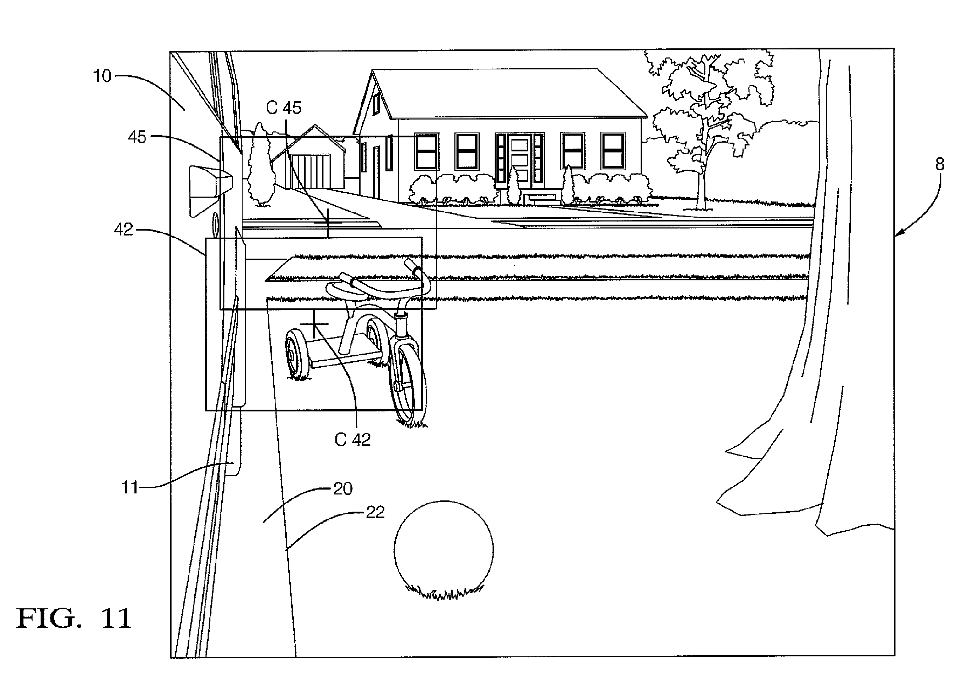

In another embodiment, the vehicle has a speedometer and the controller is configured to determine a portion based upon the vehicle speed. By way of an example, Fig. 11 shows an image 8 where vehicle 10 is in a driveway and a lawn is adjacent the vehicle. When the driver shifts the transmission into a reverse gear, portion 42 is displayed. As the driver accelerates backward portion 45 is determined and displayed. Portion 45 emphasizes the area more reward the vehicle than portion 42. The adjustment from one portion to another could be a step change due to the vehicle speed exceeding a threshold or a gradual blended change where, the portion changes incrementally from portion 42 to portion 45 as the vehicle speed increases.

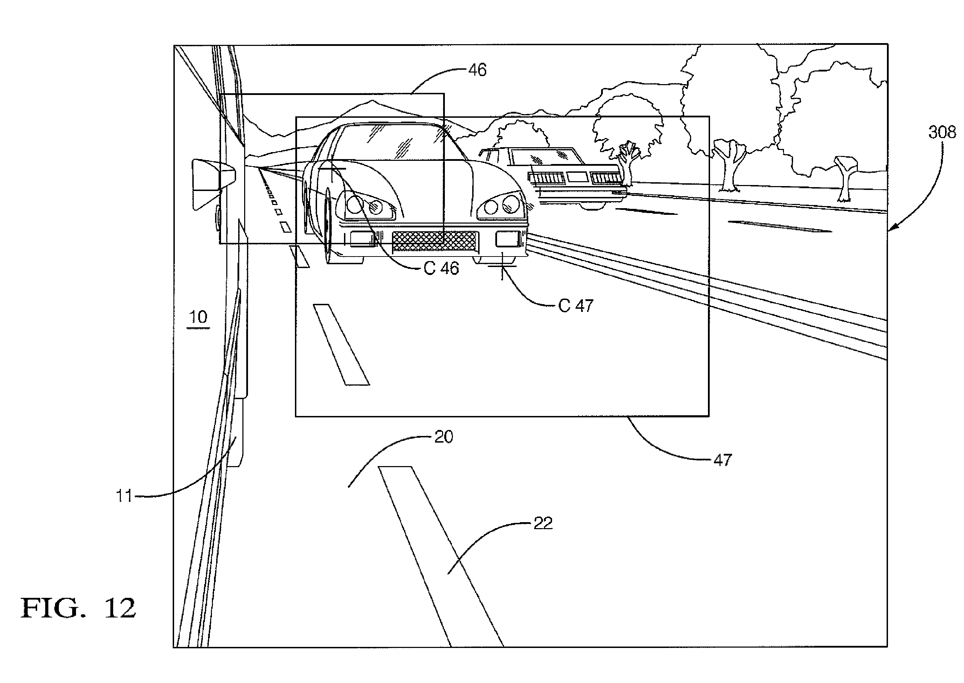

In another embodiment, the vehicle has a turn signal device, a steering angle sensor, and a speedometer and the controller is configured to determine a portion based upon signals from any of these sources. By way of an example, Fig. 12 shows an image 308 where vehicle 10 is traveling on a multi-lane expressway. When the signals indicate that the transmission is in a forward gear and traveling in a straight line at a vehicle speed, say 55 miles per hour, and the turn signal is not activated, the controller is configured to determine portion 46. If the turn signal is activated by the driver in preparation to changing lanes, the view changes to portion 47 to assist the driver in confirming that the lane about to be entered is clear of other vehicles.

Although the determined portions of the image are portrayed as rectangles, the portions could encompass areas having other shapes and the controller would process the image to provide an image having varying degrees of magnification across the image. In addition, the controller could also place indicia within the portion being displayed to indicate distances from the vehicle, where the direction of the distances not limited to the rearward direction. A user interface to the controller (not shown) would allow the driver to customize the portion displayed for various combinations of transmission gear, turn signal activation, steering angle, and vehicle speed, thereby providing the driver with a view optimized for a particular driver.

Fig. 1 shows camera 16 on the driver side of the vehicle. A similar camera could be provided on the passenger side of the vehicle for capturing a similar image of the area along side and extending rearward the passenger side of the vehicle. The portion of the image determined for viewing could be shown on a separate display, or combined with the determined portion of the driver side on a single display. The center and magnification could similarly be determined and adjusted based on various signals indicating vehicle operation.

In the described embodiment, a sideview vision system is mounted on an automobile. Alternately, the sideview vision system may be used on other vehicles such as construction equipment operating in the vicinity of other construction vehicles and construction workers, where the determined portion is based on a transmission selector or the actuation of a position control lever on the construction equipment. Also, in the described embodiment, the vehicle is equipped with an automatic transmission. Alternately, a vehicle having a sideview vision system has a manual transmission having at least one gear for traveling backward, and one gear or more gears of differing ratios for traveling forward.

Therefore, a sideview system using a camera to capture an image of an area alongside and extending rearward a vehicle, and a display to show a driver a view of a portion of the image for various vehicle operations such as backing up or changing lanes is provided. The view can be rapidly optimized because the system does not rely on mechanical position controls. The system will also be more reliable and cost effective because is does not have moving parts. The camera can be positioned and portions determined to provide the driver with a view that is readily comprehended when compared to conventional mirrors while providing coverage of blind spots present with conventional sideview mirrors. Arranging the camera to capture an image covering an area larger than required for viewing allows the center and magnification of the view can change faster, in response to changes in the vehicle operation such as the vehicle shifting into reverse or the driver preparing to make a lane change, than would be possible with mechanical position controls or mechanical camera zoom controls. Sufficient display resolution when displaying only a portion of an image captured by a camera is possible because of the availability of high resolution cameras. Use of high pixel count cameras improves the resolution of the displayed portion when displaying a portion of an image captured by a camera. Furthermore, as the cost of these cameras decreases, the method and apparatus described herein becomes more cost effective when compared to sideview vision systems that require mechanical movement.

While this invention has been described in terms of the preferred embodiments thereof, it is not intended to be so limited, but rather only to the extent set forth in the claims that follow.

## Claims

1. A method for operating a sideview vision system in a vehicle (10) comprising a transmission selector (29,30) having a first position and a second position, said sideview vision system comprising a camera (16) fixedly mounted to the vehicle (10) for capturing an image (8,108,208,308) alongside and extending rearward the vehicle, and a display (14) for displaying a view to a driver (12) of the vehicle, said method comprising:
capturing an image using the camera, said image comprising a first portion (41) and a second portion (42) different from the first portion;
displaying a first view corresponding to the first portion in response to the transmission selector being in the first position; and
displaying a second view corresponding to the second portion in response to the transmission selector being in the second position.

2. A method in accordance with claim 1, wherein
the first portion (41) is **characterized by** a first portion center (C41); and
the second portion (42) is **characterized by** a second portion center (C42) different from the first portion center
or wherein
the first portion (41) is **characterized by** a first view magnification, and the second portion (42) is **characterized by** a second view magnification.

3. A method in accordance with claim 2, wherein
the first portion (41) is directed at a first area beside the vehicle (10) and forward of the vehicle rear wheel (11); and
the second portion (42) is directed at a second area beside the vehicle and rearward of the vehicle rear wheel.

4. A method in accordance with claim 1, wherein
the first position of the transmission selector (29,30) corresponds to the transmission being in a forward gear; and
the second position of the transmission selector corresponds to the transmission being in a reverse gear.

5. A method in accordance with claim 4, wherein the vehicle (10) further comprises a turn signal device, and wherein the method further comprises the steps of:
when the transmission selector (29,30) is in the forward gear and the turn signal device is not actuated, displaying the first view;
when the transmission selector is in the forward gear and the turn signal device is actuated, displaying a third view corresponding to a third portion (43) of the image (108) distinct from the first portion (41).

6. A method in accordance with claim 4, wherein the vehicle (10) further comprises a steering angle sensor (36), and wherein the method further comprises the steps of:
when the transmission selector (29,30) is in the reverse gear and the steering angle sensor indicates that the vehicle is in a condition for straight travel, displaying the second view; and
when the transmission selector is in the reverse gear and the steering angle sensor indicates that the vehicle is in a condition for turning, displaying a third view corresponding to a third portion (44) of the image (208) distinct from the second portion (42).

7. A method in accordance with claim 4, wherein the vehicle (10) further comprises a speedometer (26), and wherein the method further comprises the steps of:
when the transmission selector (29,30) is in the reverse gear and the speedometer indicates that the vehicle is not traveling, displaying the second view; and
when the transmission selector is in the reverse gear and the speedometer indicates that the vehicle is traveling, displaying a third view corresponding to a third portion (45) of the image(8) distinct from the second portion (42).

8. A method in accordance with claim 4, wherein the vehicle (10) further comprises a turn signal device, a steering angle sensor (36), and a speedometer (26), said method further comprising the steps of:
when the transmission selector (29,30) is in the forward gear, the turn signal is not actuated, the speedometer indicates that the vehicle is traveling, and steering angle sensor indicates straight travel, displaying a forth portion (46); and
when the transmission selector is in the forward gear, the turn signal is actuated, the speedometer indicates that the vehicle is traveling, and steering angle sensor indicates straight travel displaying a fifth portion (47) of the image (308) distinct from the forth portion.

9. A sideview vision system for a vehicle (10), said vehicle comprising a transmission selector (29,30) having a first position and a second position, said sideview vision system comprising:
a camera (16) fixedly mounted to the vehicle and adapted for capturing an image alongside and extending rearward the vehicle, said image comprising a first portion (41) and a second portion (42) distinct from the first portion;
a display (14) for displaying a view to a driver (12) of the vehicle; and
a controller (15) for receiving the image from the camera and configured to output the view to the display, wherein the view corresponds to the first portion when the transmission selector is in the first position, and to the second portion when the transmission selector is in the second position.

10. A system in accordance with claim 9, wherein the controller is further configured so that:
the first portion (41) is **characterized by** a first portion center (C41); and
the second portion (42) is **characterized by** a second portion center (C42);
or wherein
the first portion is **characterized by** a first portion magnification; and
the second portion is **characterized by** a second portion magnification.

11. A system in accordance with claim 9, wherein the vehicle (10) further comprises a transmission having a forward gear and a reverse gear so that:
the first position of the transmission selector (29,30) corresponds to the transmission being in the forward gear; and
the second position of the transmission selector corresponds to the transmission being in the reverse gear
and wherein
the controller (15) is further configured so that:
the first portion (41) is directed at a first area beside the vehicle and forward of the vehicle rear wheel (11); and
the second portion (42) is directed at a second area beside the vehicle and rearward of the vehicle rear wheel.

12. A system in accordance with claim 9, wherein the vehicle (10) further comprises a turn signal device; and wherein the controller (15) is further configured to receive a turn signal activation from the turn signal device so that:
the view corresponds to the first portion (41) when the transmission is in the forward gear and the turn signal is not activated; and
the view corresponds to a third portion (43) distinct from the first portion when the transmission is in the forward gear and the turn signal is activated.

13. A system in accordance with claim 9, wherein the vehicle (10) further comprises a steering angle sensor (36); and wherein the controller (15) is further configured to receive a steering angle indicative of the vehicle being in a condition for straight travel or turning so that:
the view corresponds to the second portion (42) when the transmission is in the reverse gear and the vehicle is in the condition for straight travel; and
the view corresponds to a third portion (44) distinct from the second portion when the transmission is in the reverse gear and the vehicle is in the condition for turning.

14. A system in accordance with claim 9, wherein the vehicle (10) further comprises a speedometer (26), and wherein the controller (15) is further configured to receive a vehicle speed indicative of the vehicle traveling so that:
the view corresponds to the second portion (42) when the transmission is in the reverse gear and the vehicle is not traveling; and
the view corresponds to a third portion (45) distinct from the second portion when the transmission is in the reverse gear and the vehicle is traveling.

15. A system in accordance with claim 9, wherein the vehicle (10) further comprises a turn signal device, a steering angle sensor (36), and a speedometer; and wherein the controller is further configured to receive a turn signal activation from the turn signal device, a steering angle indicative of the vehicle being in a condition for straight travel or turning, and a vehicle speed indicative of the vehicle traveling so that:
the view corresponds to a forth portion (46) when the transmission is in the forward gear, the turn signal device is not activated, the vehicle is in the condition for straight travel, and the vehicle is traveling; and
the view corresponds to a fifth portion (47) distinct from the forth portion when the transmission is in the forward gear, the turn signal device is activated, the vehicle is in the condition for straight travel, and the vehicle is traveling.
